# EUROPEAN PATENT APPLICATION

(11) **EP 0 605 120 A1**
(43) Date of publication of application: **06.07.1994**
(21) Application number: 93309771.9
(22) Date of filing: 06.12.1993
(51) Int. Cl.: H04Q 7/04

(54) **System for completing calls to roaming cellular telephone subscribers**

(30) Priority: 31.12.1992 US 999200; 31.12.1992 US 999073
(71) Applicant: AT&T Corp., New York, NY 10013-2412 (US)
(72) Inventor: Pehlert, William King, Holmdel, New Jersey 07733 (US); Russell, Larry Arnise, Atlantic Highlands, New Jersey 07716 (US); Sheinbein, Daniel, Elizabeth, New Jersey 07208 (US)
(74) Representative: Buckley, Christopher Simon Thirsk

(57) **Abstract**

Cellular telephone calls are completed to roamers (e.g. 157) by arranging a Mobile Telephone Switching Office (MTSO) (103) to forward to one or more elements in the Switched Telecommunication Network (STN) (145), such as a centralized database (138) accessible from the switches (131,132) in the network, information enabling a call to a roaming cellular subscriber (157) to be forwarded to the foreign service area MTSO (153) serving that subscriber, without the need to route the call to the MTSO (103) serving the subscribers home service area (101). The information provided by the MTSO can be the TDN or other information identifying the telephone number to which calls placed to the roaming cellular subscriber should be completed. The switch (131) utilizing the information from the MTSO is typically the "originating switch" within the LEC or IXC network first receiving the call (e.g. from 120), but can be any switch within the STN through which calls to the home service area MTSO are routed. The MTSO sending information is generally the home service area MTSO (103), but the foreign service area MTSO (153) can also perform this function. When calls to the cellular subscriber (157) are received in the switch, "cellular" calls are differentiated from "other" calls, such as by using the NPA (area code) and/or NXX (telephone exchange) associated with the MTSO. For cellular calls, the database (138) is queried; if the subscriber (157) is roaming, the TDN or other stored information is retrieved and used to route the call through the STN to the foreign service area MTSO (153), without the necessity of the call being connected to, routed through, or forwarded by, the home service area MTSO (103). Under certain circumstances, the call can be routed to a wireline telephone (e.g. 129).

## Description

### Field of the Invention

This invention relates generally to arrangements in a mobile telephone switching office (MTSO), and in a switched telecommunications network (STN), for completion of telephone calls placed to cellular telephone subscribers, and, in particular, to completion of such calls when the subscribers are roaming outside of the home service area or territory of their cellular carrier.

### Background of the Invention

Much effort and attention has already been directed at the problem of creating a nationwide, or indeed, global cellular telephone network, so that roaming cellular telephone subscribers can receive telephone calls even when they are out of the home service area or territory of their cellular carrier. See, for example, Huff, "Cellular Networking: The Building of the Nationwide Cellular Network", Cellular Business, August, 1988, and U.S. Patent 4,901,340 issued to T. S. Parker et al. on February 13, 1990.

The solution to the roaming problem that has been proposed by Parker and others centers upon providing a Temporary Directory Number (TDN) to the Mobile Telephone Switching Office (MTSO) serving the subscribers home service area, when the subscriber is roaming. The TDN is generated in a foreign service area MTSO, typically in response to the origination of a call in that service area, indicating that the roamer desires that calls placed to the subscriber and received in the home service area MTSO be forwarded to the remote MTSO using the TDN. Thus, when a call destined for the roaming subscriber, placed by a caller dialing the subscriber's Mobile Identification Number (MID), is received in the home service area MTSO, the TDN can be retrieved, and the call forwarded, via the wireline Switched Telecommunications Network (STN), which, as used herein, includes the telecommunications networks of Inter-Exchange Carriers (IXC's) and local Exchange Carriers (LEC's), to the foreign service area MTSO. The call can then be completed as a normal, cellular call as though the subscriber was present in his/her home service area.

One problem associated with the foregoing arrangement is that a call to a roamer must be processed in two MTSO's, one serving the home service area and the other serving the remote service area. This adds to call completion time. More importantly, it generally decreases the quality of the communication circuit connecting the calling party to the roaming cellular subscriber, since the trunks into and out of the home service area MTSO where the call is "hairpinned" are generally not as good as those within the STN. A second problem, in today's environment, is the inability to forward a call destined for a cellular telephone, to a prespecified wireline telephone.

### Summary of the Invention

The foregoing problem is solved, and a technical advance is achieved in accordance with the present invention, by arranging an MTSO to forward to one or more elements in the switched telecommunication network, such as a centralized database accessible from the switches in the network, information enabling a call to a roaming cellular subscriber to be forwarded to the foreign service area MTSO serving that subscriber, without the need to route the call to the MTSO serving the subscribers home service area. The information provided by the MTSO can be the TDN or other information identifying the telephone number to which calls placed to the roaming cellular subscriber should be completed. The switch utilizing the information from the MTSO is typically the "originating switch" within the LEC or IXC network first receiving the call, but can be any switch within the STN through which calls to the home service area MTSO are route The MTSO sending the information is generally the home service area MTSO, but the foreign service area MTSO can also perform this function.

When calls to the cellular subscriber are received in the switch, "cellular" calls are differentiated from "other" calls, such as by using the NPA (area code) and/or NXX (telephone exchange) associated with the MTSO. For cellular calls, the database is queried; if the subscriber is roaming, the TDN or other stored information is retrieved and used to route the call through the STN to the foreign service area MTSO, without the necessity of the call being connected to, routed through, or forwarded by, the home service area MTSO. Under certain circumstances, the call can be routed to a wireline telephone.

In accordance with one embodiment of the invention, the information stored for each cellular subscriber can indicate three possible conditions or logical states: in logical state one, the call is routed as originally dialed, to the home service area MTSO; in logical state two, the call is routed to the foreign service area MTSO using the TDN; in logical state three, the call is routed to the customer via the wireline telephone network, using a stored (typically 10 digit) number previously provided by the subscriber. The wireline number can be entered and updated by the subscriber via a support system including an interactive voice response unit that is accessed via a toll free number, and the MTSO advised of the update. In another embodiment of the invention, a profile is stored for each subscriber indicating different call treatments for other call conditions, such as alternate routing on busy, time of day or day of week routing, etc.

The information pertaining to a cellular subscriber can be updated periodically, or only in response to the occurrence of a predetermined trigger condition, such as when (a) a given time is reached, or (b) when a message indicating that the subscriber is roaming is received, or (c) when the subscriber sends a message to the MTSO indicating that his,'her database record has been or should be updated.

### Brief Description of the Drawing

The present invention will be more fully appreciated by consideration of the following detailed description, which should be read in light of the accompanying drawing in which:
Fig. 1 is a block diagram of a system arranged to route telephone calls destined for a roaming cellular subscriber to the foreign service area MTSO in which the roamer is located, in accordance with information provided by an MTSO and stored in a database in the STN;
Fig. 2 is a diagram illustrating the format of a typical cellular subscriber record stored in database 138 of Fig. 1;
Fig. 3 is a flow diagram illustrating the process performed by MTSO 103 in the system of Fig. 1; and
Fig. 4 is a flow diagram illustrating the process performed by switch 131 in the system of Fig. 1.

### Detailed Description

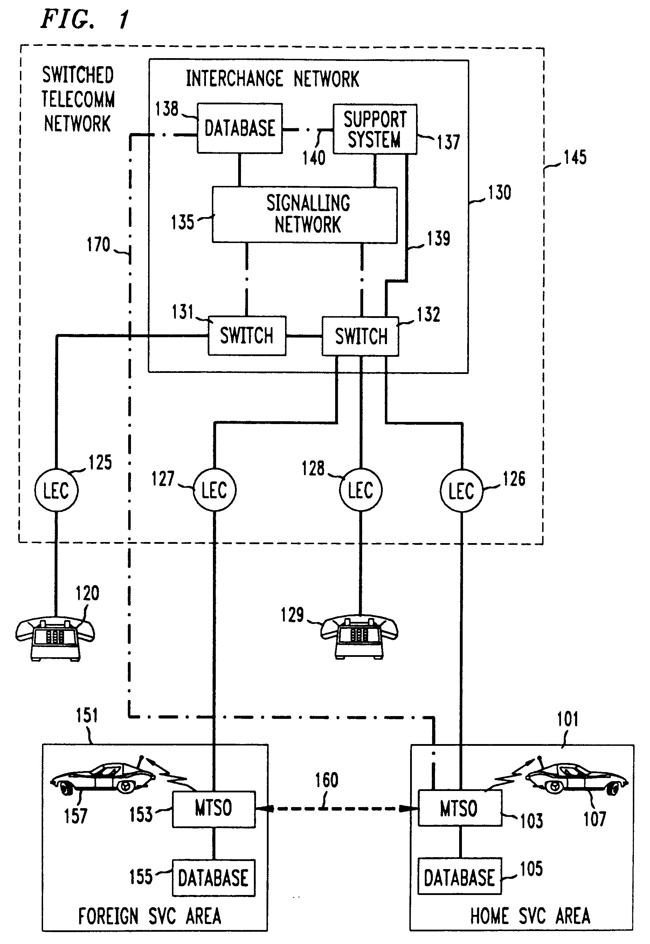

Referring first to Fig. 1, there is shown a block diagram of a system arranged to route telephone calls to a roaming cellular subscriber located in a foreign service area MTSO, in accordance with information provided by an MTSO and stored in a database in STN 145. In Fig. 1, rectangular area 101 represents diagrammatically the home service area of a cellular telephone subscriber, which is served by a first (home) mobile telephone switching office (MTSO) 103. Rectangular area 151 represents diagrammatically a foreign service area in which the cellular subscriber may occasionally roam. Area 151 is served by another (foreign) MTSO 153. Each MTSO 103, 153 can access subscriber records from an associated database, 105, 155, respectively, as described below.

Using presently available systems and techniques, when a cellular subscriber is in his/her home area 101, a telephone call, illustratively a long distance call, to that subscriber, originating from a wireline telephone 120, proceeds substantially as follows: (a) The call is received in LEC 125 serving telephone 120. (b) Based upon the IXC selected by the subscriber of telephone 120, the access code dialed by the calling party, and/or the dialed number, the call is routed to a particular switch 131 in the long distance (interexchange) telecommunications network 130 of the selected IXC. (c) Depending upon the routing for the call, the call is extended through one or more other switches, such as switch 132 in network 130, before (d) being extended to LEC 126 that serves the home MTSO 103. (e) LEC 126 extends the call, along with the dialed number or information derived therefrom, to MTSO 103, which (f) launches a query to database 105 in order to retrieve information for completing the call "over the air" to the cellular subscriber who may, for example, be in automobile 107 within area 101. This information is normally the MID for the cellular subscriber.

When a cellular subscriber is in a foreign service area 151, a long distance call to that subscriber originating from a wireline telephone 120, using the arrangement that prevails today, proceeds in a very similar manner. However, in response to the query launched by MTSO in step (f) above, the information retrieved is the Temporary Directory Number (TDN) and any other related information indicating to MTSO 103 that the subscriber is roaming in foreign area 151. In response to retrieval of this information, MTSO forwards the call to the foreign MTSO 153, typically by launching an outgoing call and then bridging the incoming and outgoing calls. The forwarded call is routed, using a call routing process that is, generally speaking, similar to the process just described with respect to the incoming call, again through LEC 126 and, illustratively, through switch 132 in network 130 to the LEC 127 serving MTSO 153. When the call arrives in MTSO 153, the TDN in used to complete the call "over the air" to the roaming cellular subscriber who may, for example, be in automobile 157 within area 151.

If the call originated from a cellular phone instead of wireline telephone 120, the process described above is essentially the same, except that the call is routed by the MTSO serving the originating phone to a serving LEC or IXC switch, where the process described above continues.

Forwarding of the call to the roaming subscriber in foreign service area 151 in the manner described above, is enabled by systems such as the one described in the aforementioned Parker et al. patent, in which the information stored in database 105 which supports the home MTSO 103 is updated with information stored in database 155 which supports the foreign MTSO 153. This information is communicated from MTSO 153 to MTSO 103 via any available communication path 160, which, as shown in Fig. 1, may be outside of, and independent of, network 130. Alternatively, this communication can also be completed via elements in STN 145, if desired.

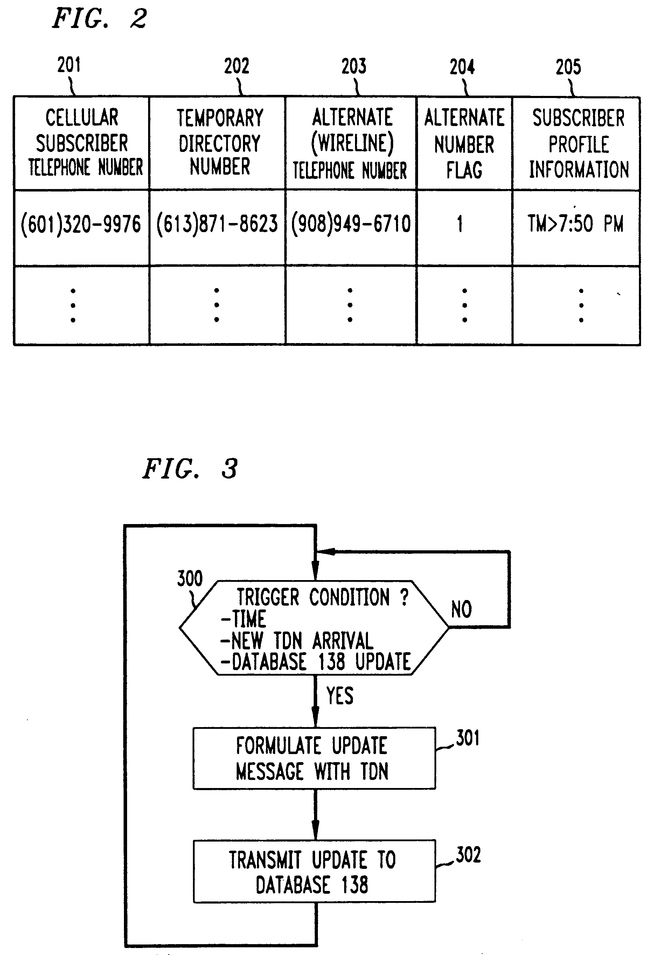

While the forwarding just described is advantageous in that it allows a roamer to receive incoming cellular calls in foreign area 151, we have recognized that the call is unnecessarily routed to and through MTSO 103. In accordance with the present invention, such unnecessary routing is avoided, by arranging an MTSO, illustratively MTSO 103, to supply information indicative of the fact that a cellular subscriber is roaming, such as the TDN contained in database 105, to the STN, illustratively to a centralized database 138 within network 130 that can be accessed by the switches within the STN. This information, which can be stored in database 138 in a form shown in Fig. 2, described below, is updated to indicate the current status of the cellular subscriber. Updating can be performed "in bulk", on a periodic (time interval) basis, or alternatively on a per subscriber basis, only when the information in database 105 for that subscriber changes.

Once the information transfer or exchange arrangement between MTSO 103 and database 105, on the one hand, and database 138 and STN 145, on the other hand, has been implemented in accordance with our invention, the progress of a call from a calling party at telephone 120 to the cellular subscriber roaming in foreign service area 151 proceeds as follows: (a) The call is received in LEC 125 serving telephone 120. (b) Based upon the IXC selected by the subscriber of telephone 120, the access code dialed by the calling party, or the dialed number, the call is routed to a particular toll switch 131 in network 130 of the selected IXC. (c) Switch 131 recognizes from the dialed number that the call is destined for a cellular mobile subscriber. This differentiation can be made by virtue of the fact that all calls to such subscribers (whether roaming or in the home area) are directed either to certain area codes (NPA's) or certain telephone exchanges (NXX's). Alternatively, other components (or all) of the dialed number can be examined. (d) Switch 131, in response to the recognition that the call is destined for a cellular subscriber, launches a query to database 138 via signalling network 135, in order to access and retrieve any stored routing information for the call. The results of this query, and the information obtained, may indicate one of three possible conditions or logical states for that particular subscriber.

First, the subscriber may be present in his/her home area, or no record may exist for that cellular subscriber, or the information may be corrupted or invalid. In that event, the call is routed as originally dialed, to the home service area MTSO 103, in the conventional manner and as outlined above.

Second, the record may contain the TDN for the subscriber, indicating that the call should be routed to MTSO 153 (rather than MTSO 103), since the subscriber is in the foreign service area 151. Routing of the call, with the TDN, is completed via switch 132 and LEC 127. In MTSO 153, the "over the air" communication to the roaming subscriber is accomplished using the TDN, as described above.

Third, the subscriber may have provided a wireline (typically 10 digit) telephone number at which the subscriber temporarily desires to receive calls. In this event, switch 131 routes the call to the appropriate destination, such as telephone 129, in a manner conventionally used for wireline calls, for example, through switch 132 and LEC 128.

To implement the third condition just described, the wireline 10 digit telephone number can be entered in database 138 and updated by the subscriber via a support system 137 that may include an interactive voice response unit arranged to accept voice or touch-tone inputs. Advantageously, support system 137 may be accessed by dialing a toll free number, establishing a path to support system 137, via any switch, such as switch 132, and trunks 139. Support system 137 then updates database 138 via any available communication path, such as link 140. Alternatively, the update can be performed by interaction between the subscriber and the MTSO, which then formulates a message and transmits it to database 138.

Referring now to Fig. 2, there is shown a diagram illustrating the format of a typical cellular subscriber record stored in database 138 of Fig. 1. Field 201 contains the telephone numbers for cellular subscribers who can be reached when roaming in a foreign service area using the present invention. As stated above, by convention agreed to between wireline and mobile telephone providers, the telephone numbers for cellular subscribers have either unique NPA's or NXX's, so that each type of call can be readily distinguished from the other. Field 202 contains the TDN for the subscriber, if there is one. Field 203 contains the wireline (10 digit) telephone number at which the cellular subscriber desires to be reached, but only when the flag in field 204 is set. Finally, field 205 can contain a profile for the subscriber indicating different call treatments for other call conditions, such as alternate routing on busy, time-of-day or day-of-week routing, etc. In the example of Fig. 2, if the current time is after 7:50 P.M., calls to the cellular subscriber are routed to the alternate (wireline) number contained in field 203, by setting the flag in field 204 to a "high" value.

Fig. 3 is a flow diagram illustrating the process performed by MTSO 103 in the system of Fig. 1. Generally, in this process, information relating to the location and/or the telephone number of a cellular roamer at the present time (or some specified future time) is provided by the cellular communication system, illustratively an MTSO, to a database 138 in STN 145. This information can be communicated to STN 145 via a communication link 170 connecting MTSO 103 to database 138, in the form of a digital data message over an X.25 link, or a Q.931 message over an ISDN link. Alternatively, communication link 170 can be part of the Common Channel Signalling (CCS) network, and the information formulated as a signalling message. The received information is stored in the format described above in connection with Fig. 2. Illustratively database 138 is a shared common database such as a "Network Control Point" (NCP).

The process begins in step 300, in which the system is arranged to monitor for the occurrence of a trigger condition, which could occur (a) when the current time equals a predetermined time, (b) when a new TDN is received indicative of the fact that the subscriber is roaming outside of his/her home service area, or (c) when the subscriber desires to update his/her profile to indicate that calls should be forwarded to a different location, such as a wireline telephone, or receive different treatment.

When a trigger condition occurs, an update message is formulated, illustratively by MTSO 103, in step 301. The update message, which contains the TDN or other subscriber provided information, is transmitted to database 138 in step 302. As indicated above, the message can be transmited directly to database 138 via a signalling link 170. Alternatively, the message may be transmitted via LEC 126 and elements in network 130, illustratively switch 132, to database 138. Note, also, that the message could be formulated in MTSO 153 and transmitted to database 138 either by another signalling link (not shown), or by elements in the STN, such as LEC 127 and switch 132. After the information for the cellular subscriber contained in database 138 has been updated, further updates are enabled by returning to monitoring step 300. Note that if a trigger condition is not detected, monitoring step 300 is also repeated.

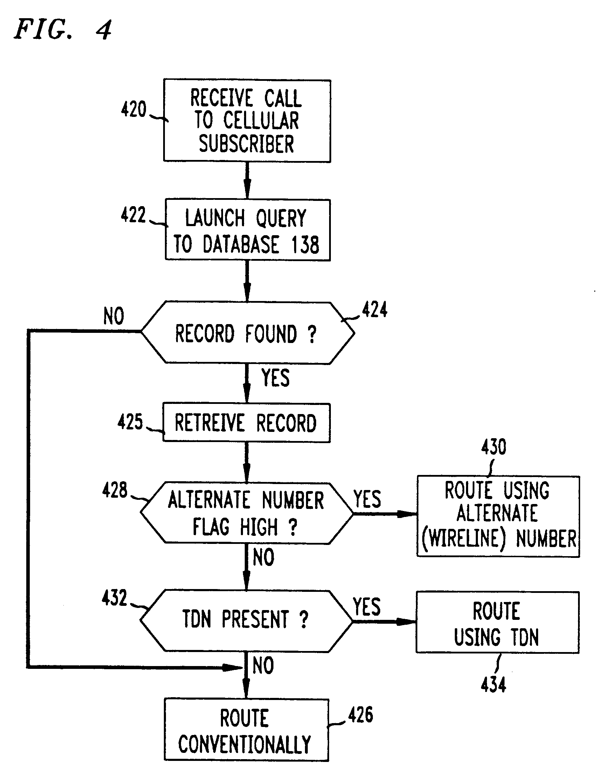

Fig. 4 is a flow diagram illustrating the process performed by switch 131 in the system of Fig. 1. Generally, in this process, the information relating to a particular cellular subscriber, previously received from an MTSO as described above in connection with Fig. 3 and stored, is thereafter accessed and used to route a call to that subscriber, or to a destination specified by that subscriber. The process begins in step 420, when a call is received in STN 145, illustratively in switch 131. Note that cellular calls are differentiated from ordinary calls in step 420, based upon the called number NPA or NXX, or the dialed number itself. In step 422, a query is launched by switch 131 to database 138, to determine if a record exists specifying call treatment for a call to this subscriber. If a negative result is reached in step 424, conventional call routing and processing is provided in step 426. If a record is found, it is retrieved in step 425, and the information examined in step 428 to determine if the alternate number flag is set or high. If a positive result is reached in step 428, indicating that the alternate number flag is high, the call is routed using the alternate (wireline) number, in step 430. If a negative result is reached in step 428, a determination is next made in step 432 as to whether or not a TDN has been provided for this subscriber. If a TDN is present in the subscriber record, the call is routed using the TDN, in step 434. Otherwise, the call is receives conventional call routing and processing in step 426.

It is to be noted here that although in the previous description of the present invention, switch 131, which is acting as the "originating switch" with respect to a call from telephone 120, launches a query to database 138 in response to receipt of a call to a cellular subscriber, it is also possible to arrange switch 132, which is acting as the "terminating switch", to perform the same function. The choice of which switch launches the query will involve consideration of several factors: if the originating switch performs this task, database 138 must contain information relating to cellular subscribers served by all terminating switches within the network. This arrangement is advantageous, in that the call is routed more efficiently and quickly to its final destination. On the other hand, if the terminating switch performs this task, database 138 need only contain information relating to cellular subscribers served by MTSO's connected to that switch. However, with this arrangement, call routing may be sub-optimum. It is also to be noted here that the database query performed in the process of Fig. 4 may be performed by a switch in one of the LEC's, and that the call to the cellular subscriber need not be a long distance call.

When implementing the present invention, many of the functions can be performed by existing elements in the long distance telecommunications network that already perform other, similar functions. Specifically, database 138 can be a Network Control Point already arranged to receive queries needed to route 800 type telephone calls. Signalling network 135, which is a data network that transmits queries to and from NCP, is advantageously the common channel signalling (CCS) network which has been widely described. Support system 137 may be an enhanced services complex, which includes one or more AT&T Conversant Interactive Voice Response Systems.

Various modifications may be made to the present invention, as will be apparent to those skilled in the art. For example, some switches include integral databases, while others use separate but associated databases. Either arrangement can be used with this invention. Support system 137 and database 138 can be combined, if desired, into a single adjunct processor serving one or more switches. Also, the invention can have application on a global basis, so that a cellular subscriber roaming, for example, in Europe, can be reached by a caller in the United States.

## Claims

1. A method for completing calls to a roaming cellular telephone subscriber, comprising the steps of
receiving from a first MTSO serving a roaming cellular telephone subscriber, information identifying the foreign service area MTSO to which calls placed to said cellular subscriber should be completed when the subscriber is roaming, and
transmitting said information to a network element in the switched telecommunications network.

2. A method as claimed in claim 1 wherein said network element is a centralized database.

3. A method as claimed in claim 1 wherein said centralized database is a Network Control Point.

4. A method for use in a telecommunications network for completing calls to a cellular telephone subscriber, comprising the step of
transmitting information from a home service area MTSO identifying a foreign service area MTSO to which calls placed to said cellular subscriber should be completed when said cellular subscriber is roaming in a foreign service area, to a database accessable by a switch within the telephone network through which calls to the subscriber are routed when the subscriber is in the home service area MTSO,
whereby, if the subscriber is roaming, a call to said cellular subscriber may be routed through said telephone network to said foreign service area MTSO using the stored information in said database.

5. A method for use in a home service area MTSO for completing calls to a roaming cellular telephone subscriber, comprising the steps of
receiving from a foreign service area MTSO information specifying a routing number for a cellular subscriber roaming in said foreign service area, and
transmitting said information to a database in the telecommunications network serving said home service area MTSO for subsequent use in routing calls to said roaming cellular telephone subscriber.

6. A method as claimed in claim 5 wherein said transmitting step is performed responsive to said receiving step, or is performed at a predetermined time, but subsequent to said receiving step.

7. A method as claimed in claim 5 wherein said transmitting step comprises transmitting said information as a signalling message over a Common Channel Signalling link.

8. A method as claimed in claim 1 or 5 wherein said network is an interexchange carrier network, or is a local exchange carrier network.

9. A method for completing calls to a cellular telephone subscriber, comprising the steps of
storing information identifying a foreign service area MTSO to which calls placed to the cellular subscriber should be completed when the subscirber is roaming in a foreign service area, in a database accessible by a switch within the telephone network through which calls to the subscriber are routed when the subscriber is in the home service area MTSO,
identifying a call to said cellular subscriber in said switch by differentiating cellular calls from other calls using the telephone number associated with said home service area MTSO,
querying said database to retrieve said stored information and information indicating if said cellular subscriber is roaming, and
if the subscriber is roaming, routing the call through said telephone network using the stored information to said foreign service area MTSO, without the necessity of the call being forwarded by said home service area MTSO.

10. A method as claimed in claim 9 wherein said information storing step comprises storing information for each cellular subscriber indicative as to whether (a) the call should be routed as originally dialed, to said home service area MTSO; (b) the call should be routed to said foreign service area MTSO; and (c) the call should be routed to said cellular subscriber via said telephone network, using a stored wireline telephone number previously provided by said cellular subscriber.

11. A method as claimed in claim 10 wherein said stored wireline telephone number is entered in said database by said cellular subscriber via a support system.

12. A method as claimed in claim 11 wherein said support system comprises an interactive voice response unit.

13. A method as claimed in claim 12 wherein said voice response unit is accessed via a toll free number.

14. A method as claimed in claim 9 wherein said information storing step comprises storing a profile indicating different call treatments for different call conditions, including alternate routing on busy, and time sensitive routing.

15. A method as claimed in claim 9 wherein said switch within the telephone network is the originating switch receiving said call from a calling party, or is the terminating switch service said home service area MTSO.

16. A method as claimed in claim 9 wherein said database is accessed by said switch via a common channel signalling system.

17. Apparatus in a telecommunications network for completing calls to a cellular telephone subscriber, comprising
a database accessible by a switch within the telephone network through which calls to the subscriber are routed when the subscriber is in the home service area MTSO,
means for storing in said database, information received from a home service area MTSO identifying a foreign service area MTSO to which calls placed to the cellular subscriber should be completed when the subscriber is roaming in a foreign service area,
means for identifying a call to said cellular subscriber in said switch by differentiating cellular calls from other calls using the telephone number associated with said home service area MTSO,
means for accessing said database to retrieve said stored information and information indicating if said cellular subscriber is roaming, and
means for muting the call through said telephone network to said foreign service area MTSO using the stored information, if the subscriber is roaming.

18. A method for completing calls to a cellular telephone subscriber via a switched telecommunications network, comprising the steps of
receiving from a first MTSO serving a cellular telephone subscriber, first information identifying the foreign service area MTSO to which calls placed to said cellular subscriber should be completed when the subscriber is roaming,
receiving from said cellular subscriber, second information identifying a wireline telephone for receiving telephone calls directed to said cellular subscriber,
storing said first and second information in a database accessible from a switch within said telecommunications network,
identifying a call to said cellular subscriber in said switch by differentiating cellular calls from other calls using the dialed number for said calls,
querying said database to retrieve said stored information, and
using said stored information to route the call through said switched telecommunications network to said cellular subscriber.
